Europäisches Patentamt

European Patent Office

Office européen des brevets

(11) Numéro de publication: **0 206 906 B1**

# FASCICULE DE BREVET EUROPEEN

(45) Date de publication de fascicule du brevet: **24.08.94** (51) Int. Cl.5: **C01F 17/00**

(21) Numéro de dépôt: **86401270.3**

(22) Date de dépôt: **11.06.86**

(54) **Nouvelles dispersions colloidales d'un composé de cérium IV en milieu aqueux et leur procédé d'obtention.**

(30) Priorité: **20.06.85 FR 8509372**

(43) Date de publication de la demande:
**30.12.86 Bulletin 86/52**

(45) Mention de la délivrance du brevet:
**24.08.94 Bulletin 94/34**

(84) Etats contractants désignés:
**AT BE CH DE FR GB IT LI LU NL SE**

(56) Documents cités:
**LU-A- 38 182**

(73) Titulaire: **RHONE-POULENC CHIMIE**
**25, quai Paul Doumer**
**F-92408 Courbevoie Cédex (FR)**

(72) Inventeur: **Chane-Ching, Jean-Yves**
**19, Raritam Avenue**
**Highland Park N.J. 08904 (US)**
Inventeur: **Dumousseau, Jean-Yves**
**60, rue des Dames**
**F-75017 - Paris (FR)**
Inventeur: **Dupuis, Patrick**
**12, rue Feutrier**
**F-75018 - Paris (FR)**

(74) Mandataire: **Dutruc-Rosset, Marie-Claude et al**
**RHONE-POULENC INTERSERVICES**
**Service Brevets Chimie**
**25, Ouai Paul Doumer**
**F-92408 Courbevoie Cédex (FR)**

**Description**

La présente invention concerne de nouvelles dispersions colloïdales aqueuses d'un composé de cérium IV, sursaturées en ions OH⁻ et un de leur procédé d'obtention.

Il est connu selon l'Encyclopédie KIRK-OTHMER, Encyclopedia of Chemical Technology (deuxième édition) volume 4, p. 850 que l'on peut préparer un dioxyde cérique hydraté répondant à la formule $CeO_2$, x $H_2O$ dans laquelle x est un nombre compris entre 0,5 et 2 et se présentant sous la forme d'un précipité gélatineux par addition d'hydroxyde de sodium ou d'ammonium aux solutions de sels cériques.

On a proposé selon le brevet français 2 416 867 un procédé de préparation d'une dispersion aqueuse d'oxyde de cérium qui consiste à former une suspension d'hydroxyde de cérium IV avec de l'eau et un acide lequel est capable de provoquer la désagrégation des cristallites, à chauffer la suspension pendant une période et à une température telles que le pH atteint une valeur stable, la quantité d'acide présente dans la suspension étant telle que cette valeur stable du pH est inférieure à 5,4, de façon à produire une suspension traitée, à laquelle on incorpore de l'eau pour produire une dispersion aqueuse d'oxyde de cérium.

Il est mentionné dans ce brevet que la préparation de l'hydrate d'oxyde de cérium (IV) peut se réaliser par précipitation à partir d'un sel de cérium : ainsi par exemple, on peut dissoudre du carbonate céreux de grande pureté dans une solution d'acide nitrique ou chlorhydrique pour obtenir une solution neutre de nitrate ou chlorure céreux que l'on oxyde avec $NH_4OH$ / $H_2O_2$ pour obtenir l'hydrate d'oxyde de cérium IV.

Il est également indiqué dans le brevet luxembourgeois 38182 un procédé de fabrication d'une dispersion aqueuse d'oxyde de terres rares hydraté consistant à précipiter l'hydroxyde de terre rare par de l'ammoniaque et à peptiser l'oxyde obtenu dans de l'eau à une température de 60 à 100°C. Le sol obtenu est un sol d'un composé trivalent de terre rare et a un pH supérieur à 7.

La demanderesse a obtenu de nouvelles dispersions colloïdales de composé de cérium IV, en milieu aqueux à partir de la solution aqueuse de sel de cérium IV, sans faire intervenir dans le procédé, l'étape de précipitation et de séparation de l'hydroxyde cérique et post-traitement de celui-ci.

Un des objets de la présente invention est constitué par de nouvelles dispersions colloïdales aqueuses d'un composé de cérium IV, de formule chimique (I) suivante :

$$Ce(OH)_{4-x}(NO_3)_x \qquad (I)$$

dans laquelle x varie entre 0,3 et 0,7.

Cette dispersion colloïdale est sursaturée en ions OH⁻.

Sachant que le produit de solubilité de l'hydroxyde cérique est égal à $10^{-50}$, on peut définir, en fonction de la concentration, un domaine de pH où l'hydroxyde cérique est stable sous forme d'un précipité solide.

Or la demanderesse a trouvé que l'on peut obtenir le cérium IV sous la forme d'une dispersion colloïdale dans une zone de pH où l'on aurait dû s'attendre à obtenir le cérium IV sous la forme d'un précipité d'hydroxyde cérique.

Un avantage de l'invention est que les dispersions colloïdales aqueuses d'un composé de cèrium IV de l'invention ont un taux de cérium sous forme colloïdale très élevé pouvant atteindre 100 %.

Un avantage de l'invention est que lesdites dispersions sont stables à température ambiante et lorsqu'elles sont soumises à une élévation de température pouvant atteindre 100°C.

Enfin, un autre avantage est que lesdites dispersions présentent un caractère peu acide (pH inférieur aux environs de 3).

On a obtenu les dispersions ayant les caractéristiques prédéfinies selon un procédé qui consiste à faire réagir une solution aqueuse d'un sel de cérium IV contenant des ions nitrate avec une base de façon à obtenir un taux de sursaturation supérieur à 3 et inférieur à 4, la quantité de base à ajouter en fonction de la concentration finale en CeIV dans la suspension étant donnée par la formule III explicitée ci-après.

Avant de définir le taux de sursaturation, on précisera la nature des réactifs intervenant dans le procédé de l'invention.

La solution d'un sel de cérium mise en oeuvre selon le procédé de l'invention peut être une solution aqueuse de nitrate cérique ou une solution aqueuse de nitrate céri-ammoniacal. Ladite solution peut contenir sans inconvénient du cérium à l'état céreux mais il est souhaitable qu'elle contienne au coins 85 % de cérium IV.

La solution de sel de cérium est choisie de telle sorte qu'elle ne contienne pas d'impuretés qui puissent se retrouver, dans le produit final. Notamment, il est préférable qu'elle soit exempte d'anions covalents à caractère coagulant tels que sulfates, etc.. Cependant, on peut en tolérer de faibles quantités. Par exemple, lesdits anions peuvent représenter jusqu'à 5 % en poids du sel de cérium exprimé en $CeO_2$.

La concentration de la solution du sel de cérium n'est pas un facteur critique, selon l'invention. Lorsqu'elle est exprimée en cérium IV, elle peut varier entre 0,1 et 3 moles par litre. Une concentration comprise entre 0,1 et 1,5 moles par litre est préférée.

La solution aqueuse du sel de cérium IV présente généralement une certaine acidité initiale et peut avoir une normalité variant entre 0,1 N et 4 N. La concentration en ions $H^+$ n'est pas critique. Il est souhaitable qu'elle se situe entre 0,1 N et 1 N.

La solution de nitrate cérique obtenue selon le procédé d'oxydation électrolytique d'une solution de nitrate céreux et qui est décrite dans la demande de brevet française FR-A 2 570 087 (n° 84 13641) constitue une matière première de choix.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention. Elle peut varier dans de larges limites, par exemple, entre 0,1 et 11 N mais il est préférable, pour obtenir des solutions concentrées en cérium IV, de faire appel d'abord à une solution dont la concentration varie entre 5 et 11 N puis à une solution plus diluée par exemple de 0,1 à 5 N.

La proportion entre la solution basique et la solution de sel de cérium IV doit être telle que le taux de sursaturation soit supérieur à 3 et inférieur à 4.

On définit le taux de sursaturation r par l'équation suivante :

$$r = \frac{n3 - n2}{n1}$$

dans laquelle :
- n1 représente le nombre de moles de Ce IV présentes dans la dispersion colloïdale finale
- n2 représente le nombre de moles $OH^-$ nécessaires pour neutraliser l'acidité apportée par la solution aqueuse du sel de cérium IV
- n3 représente le nombre total de moles $OH^-$ apportées par l'addition de la base.

Le taux de sursaturation reflète l'état colloïdal du cérium IV
- avec r = 4, le cérium IV précipite sous forme gélatineuse
- avec r = 0, le cérium IV est sous forme ionique
- avec 0 < r < 4,0, le cérium IV est sous forme ionique et/ou colloïdale.

La demanderesse a trouvé que l'obtention d'une dispersion colloïdale d'un composé de cérium IV à partir des deux réactifs précités était liée à deux paramètres à savoir le taux de sursaturation et la concentration finale en cérium IV de ladite dispersion.

On choisit selon l'invention un taux de sursaturation supérieur à 3 et inférieur ou égal à 3,8 pour une concentration finale en cérium IV de la dispersion colloïdale obtenue variant entre 0,1 M (soit 17 g/l de $CeO_2$) et 2 M (soit 344 g/l de $CeO_2$). D'une manière préférentielle, le taux de sursaturation est supérieur ou égal à 3,4 et inférieur ou égal à 3,8 pour une concentration finale en cérium IV de ladite dispersion variant entre 0,5 M (soit 86 g/l de $CeO_2$) et 1,2 M (soit 206 g/l).

D'une manière pratique, pour obtenir un taux de sursaturation désiré r choisi dans l'intervalle précité pour une concentration donnée en Ce IV dans la dispersion colloïdale finale, on ajuste la concentration de la solution basique de telle sorte qu'elle satisfasse à l'équation suivante :

$$[OH^-] = \frac{(n_1 \cdot r + n_2) \, [Ce \ IV]_f \, [Ce \ IV]_i}{n_1 \, ([Ce \ IV]_i - [Ce \ IV]_f)} \qquad (III)$$

- $[OH^-]$ représente la concentration en moles/litre de la solution basique
- $[Ce \ IV]_f$ représente la concentration en Ce IV en moles/litre de la dispersion colloïdale finale
- $[Ce \ IV]_i$ représente la concentration en Ce IV en moles/litre de la solution aqueuse du sel de cérium IV
- $n_1$ et $n_2$ sont déterminés par dosage classique de la solution aqueuse du sel de cérium IV :
  - $n_1$ par titrage potentiomètrique à l'aide d'une solution d'un sel ferreux

. n$_2$ par titrage acido-basique après complexation du cérium à l'aide d'ions oxalate.

On peut faire correspondre à un taux de sursaturation donné, une quantité de base introduite, exprimée en pourcentage en moles de la quantité de base théorique nécessaire à la neutralisation complète du cérium IV présent dans le milieu réactionnel, pour obtenir Ce(OH)$_4$.

A un taux de sursaturation supérieur à 3 et inférieur à 4, correspond une quantité molaire de base introduite supérieure à 75 % et inférieure à 100 % de la quantité théorique.

A titre d'exemples, on mentionne qu'à des taux de sursaturation de 3,5 et 3,8 correspondent respectivement des quantités molaires de base introduites représentant 87,5 et 95 % des quantités théoriques.

Un mode de réalisation préférentielle de l'invention consiste à obtenir un taux de sursaturation par contrôle du pH du milieu réactionnel.

L'obtention d'un taux de sursaturation inférieur à 4 correspond à un pH final de la dispersion colloïdale du composé de cérium IV inférieur ou égal à 3,0.

Sans limiter la portée de l'invention, on précisera à titre d'exemples, que dans le cas d'une solution de nitrate cérique ayant une concentration telle que la concentration finale du Ce IV dans la dispersion colloïdale obtenue soit de 0,7 M, on obtient respectivement les taux de sursaturation suivants correspondants aux domaines de pH définis ci-après :

0,2 < pH < 0,7     3 < r < 3,3
0,7 < pH < 2,7     3,3 < r < 3,7

La réaction entre la solution aqueuse du sel de cérium IV et la base mises en oeuvre dans les quantités définies précédemment est effectuée à une température qui peut se situer entre 0°C et 60°C mais de préférence à la température ambiante (le plus souvent 15 à 25°C).

On peut réaliser le mélange des réactifs précités selon plusieurs variantes. Par exemple, on peut faire le mélange simultané, sous agitation, de la solution aqueuse du sel de cérium IV et de la solution basique ou bien additionner, en continu ou en une seule fois, la base dans la solution aqueuse du sel de cérium IV et inversement.

D'une manière préférentielle, on additionne une solution basique concentrée jusqu'à obtention d'un taux de sursaturation de 3,3 correspondant à un pH de 0,6 puis avec la solution basique plus diluée, on atteint le pH final désiré.

La durée du mélange n'est pas critique et dépend des capacités de l'appareillage. Elle peut varier entre 0,1 seconde et 30 heures.

Quel que soit l'ordre d'introduction des réactifs, on obtient une dispersion colloïdale d'un composé de cérium IV en milieu aqueux que l'on dénommera par la suite sous le nom de "sol.".

Conformément à la présente invention, le composé de cérium IV se trouve sous la forme d'une dispersion colloïdale dans l'eau ce qui signifie que ledit composé a des particules de dimensions colloïdales mais ceci n'exclut pas la présence de Ce IV sous forme ionique. Il est à noter que le pourcentage de Ce IV sous forme colloïdale peut être plus ou moins corrélé avec le taux de sursaturation. La quasi totalité du cérium IV est sous forme colloïdale lorsque r est compris entre 3,4 et 3,8.

La composition chimique des colloïdes est déterminée sur le résidu obtenu après ultracentrifugation de la dispersion par dosage du cérium IV selon la méthode précitée et par dosage des ions nitrate par dosage acido-basique des ions NH$_4^+$ obtenus après réduction des ions nitrate.

On peut toutefois observer la présence d'ions ammonium adsorbés sur les particules colloïdales, selon la nature des réactifs de départ.

L'analyse par diffraction X du résidu solide montre que c'est un produit mal cristallisé qui présente une phase cristalline CeO$_2$ type fluorine c'est-à-dire cubique face centrée ayant un paramètre de maille d'environ 5,42 Å et un taux de cristallisation variant de 15 à 40 %.

Le sol aqueux obtenu selon l'invention peut présenter une forte concentration en composé de cérium IV puisqu'il peut contenir jusqu'à environ 30 % en poids de CeO$_2$.

Le sol aqueux peut présenter une force ionique importante du fait de la présence d'une forte concentration du sel de la base qui se situe entre 0,3 et 8,0 moles/litre.

La densité des colloïdes est mesurée sur la dispersion colloïdale par détermination de la masse moléculaire à l'aide de la méthode de diffusion classique de la lumière et par corrélation avec le diamètre hydrodynamique défini selon la méthode de diffusion quasi-élastique de la lumière.

La densité des colloïdes est toujours inférieure à celle de CeO$_2$ (d = 7,2). Elle varie entre 3,5 et 6,0 et augmente au fur et à mesure que le taux de sursaturation croît.

La taille des colloïdes est définie par la mesure du diamètre hydrodynamique de colloïdes déterminé par diffusion quasi-élastique de la lumière selon la méthode décrite par Michael L. McConnell dans "Analytical Chemistry, Vol. 53, n° 8, 1007 A (1981)".

4

Elle dépend de la concentration en cérium IV et du taux de sursaturation.

Pour une concentration en cérium IV comprise entre 0,1 M et 2 M et un taux de sursaturation variant de 3 à 3,8, le diamètre hydrodynamique des colloïdes est compris entre 50 et 400 Å.

On remarquera que les sols obtenus selon le procédé de l'invention sont parfaitement stables dans les conditions habituelles de stockage ce qui est nettement mis en évidence dans les exemples.

Un autre objet de la présente invention réside également dans des dispersions colloïdales aqueuses mixtes d'un composé de cérium IV et d'un autre cation métallique $M^{n+}$ : $n^+$ symbolise le degré d'oxydation du métal et est généralement égal à + 3 ou + 4.

A titre de cation métallique que l'on désignera de manière générique, par cation de métal M, on peut faire appel à un cation d'un métal qui peut être choisi dans le groupe 1b, 2b, 3b, 4b, 5b, 6b, 7b, le groupe 8 et le groupe 3a et 4a de la classification périodique telle que définie dans "Handbook of Chemistry and Physics B-4 (57è édition)".

D'une manière préférentielle, on choisit un cation métallique à caractère acide.

Par cation métallique à caractère acide, on entend un cation dont l'hydroxyde métallique précipite à des faibles valeurs de pH, de préférence à un pH inférieur à 4. A titre de cations acides utilisés préférentiellement on peut citer ceux des métaux fer, titane, zirconium et étain.

On peut remplacer de 0,1 à 50 % des moles de cérium IV par le cation métallique tel que défini précédemment.

Le procédé d'obtention de ces dispersions colloïdales aqueuses mixtes d'un composé de cérium IV et d'un cation $M^{n+}$ est similaire à celui qui permet d'obtenir une dispersion colloïdale d'un composé de cérium IV seul.

Selon l'invention, on fait réagir une solution aqueuse d'un sel de cérium IV et d'un sel de métal M avec une base de façon à obtenir un taux de sursaturation exprimé par rapport au cérium IV supérieur à 3 et inférieur à 5,5

La quantité de base ajoutée, exprimée en pourcentage en moles de la quantité de base théorique nécessaire à la neutralisation complète du cérium IV et du cation $M^{n+}$ présents dans le milieu réactionnel, pour obtenir $Ce(OH)_4$ et $M(OH)_n$, peut varier entre 60 et 95 %.

D'une manière pratique, l'obtention dudit taux de sursaturation correspond à un pH final de la dispersion colloïdale mixte inférieur ou égal à 3,0.

Les caractéristiques des réactifs et les conditions de leur mise en oeuvre correspondent à ce qui a été décrit précédemment.

On met en oeuvre le métal M de préférence sous la même forme sous laquelle se trouve le sel de cérium. On les choisit de préférence sous forme nitrate.

On peut utiliser le sel du métal M sous forme anhydre ou hydratée.

On peut le mettre en oeuvre sous forme solide ou sous forme de solution aqueuse dont la concentration peut varier entre 0,01 mole/litre et jusqu'à la solubilité maximale du sel utilisé de métal M.

Un mode de réalisation pratique de l'invention consiste à introduire le sel du métal M sous forme solide dans la solution du sel de cérium IV puis à ajouter la base.

On peut également mettre le sel du métal M sous forme de solution aqueuse, ensuite mélanger ladite solution avec la solution aqueuse du sel de cérium IV et enfin procéder à l'addition de la base.

On obtient une dispersion colloïdale d'un composé de cérium IV et d'un cation de métal $M^{n+}$ en milieu aqueux qui peut présenter une forte concentration en composés de cérium IV et de métal M puisqu'elle peut contenir jusqu'à 30 % en poids de $CeO_2$ et de $M_2O_n$.

Le diamètre hydrodynamique de ses colloïdes déterminé selon la méthode précitée, peut varier entre 50 et 2000 Å.

Pour permettre de mieux illustrer la mise en oeuvre de l'invention, on donne ci-après différents exemples, bien entendu non limitatifs.

Dans le premier exemple, on illustre la préparation d'une dispersion colloïdale par sursaturation en ions $OH^-$ d'une solution de nitrate cérique.

EXEMPLE 1 -

Dans un ballon tricol de 6 litres muni d'un thermomètre, d'un dispositif d'agitation, d'un système d'introduction de réactif (pompe doseuse), on introduit à température ambiante, 2000 $cm^3$ d'une solution de nitrate cérique contenant 1,2 moles/litre de cérium IV, 0,04 mole/litre de cérium III et ayant une acidité libre de 0,5 N préparée par électrolyse conformément à FR-A 2 570 087.

Dans ladite solution maintenue sous agitation, on additionne à température ambiante, progressivement, pendant 13,7 heures, une première solution d'ammoniaque concentrée 6,6 N à raison de 100 $cm^3$/heure.

On poursuit l'addition d'ions OH⁻ à l'aide d'une solution d'ammoniaque 2,4 N qui est ajoutée pendant 5 heures à raison de 100 cm³/heure.

On obtient une dispersion colloïdale aqueuse d'un composé de cérium IV à une concentration exprimée en CeO₂ égale à 107 g/l et un pH égal à 2,67.

Le pourcentage de cérium sous forme colloïdale est déterminé en dosant le cérium total dans la solution surnageante obtenue après ultracentrifugation (45 000 tours/mn - 1 heure) par titrage potentiomètrique à l'aide d'une solution titrée de fer II. Le dosage de la solution surnageante en cérium montre une très faible concentration en cérium total de l'ordre de 0,02 mole ce qui permet de déterminer un pourcentage de cérium sous forme colloïdale dans la dispersion sursaturée voisin de 100 %.

On caractérise la taille des colloïdes par diffusion quasi-élastique de la lumière selon la méthode décrite par Michael L. McConnell dans Analytical Chemistry, Vol. 53 n° 8 1007 A (1981). Le diamètre hydrodynamique des colloïdes est de l'ordre de 147 Å.

On remarque que le sol obtenu présente une bonne stabilité au stockage et ne présente pas de décantation après au moins un an de stockage.

Dans l'exemple qui suit, on prépare une dispersion colloïdale mixte par sursaturation d'une solution aqueuse de nitrate cérique et de nitrate ferrique.

EXEMPLE 2 -

Dans le même type d'appareillage tel que décrit à l'exemple 1, on y introduit à température ambiante, 1744 cm³ d'une solution de nitrate cérique contenant 1,2 moles/litre de cérium IV, 0,04 mole/litre de cérium III et ayant une acidité libre de 0,5 N et 86,15 g de nitrate ferrique Fe(NO₃)₃, 9H₂O à 98 % de pureté.

Dans ledit mélange maintenu sous agitation, on additionne à température ambiante 1256 cm³ d'une solution d'ammoniaque concentrée 6,19 N à raison de 100 cm³/heure, puis 100 cm³ d'une solution d'ammoniaque 2,48 N.

On obtient une dispersion colloïdale aqueuse présentant une concentration en CeO₂ de l'ordre de 116,13 g/l et un pH de 1,5.

L'examen d'une partie aliquote (290 cm³) par diffusion quasi-élastique de la lumière montre la présence de deux populations de colloïdes ayant respectivement un diamètre hydrodynamique de 76 Å et de 199 Å.

En poursuivant l'addition de la solution d'ammoniaque 2,48 N pendant 66 minutes, on obtient une dispersion aqueuse colloïdale présentant une concentration en CeO₂ de 111,7 g/l et un pH égal à 2.

On caractérise sur un prélèvement de 240 cm³ deux populations de colloïdes par leur diamètre hydrodynamique respectif de 167 Å et de 977 Å.

En continuant l'addition de la solutions d'ammoniaque pendant 18 minutes à raison de 100 cm³/heure, on obtient une dispersion à pH = 2,56 et présentant deux populations de colloïdes avec des diamètres hydrodynamiques de 229 Å et 1270 Å.

La quantité de base ainsi ajoutée dans le milieu réactionnel représente 84 % en moles de la quantité théorique nécessaire à la neutralisation complète du cérium et du fer présents dans le milieu réactionnel (OH⁻/Fe³⁺ = 3 et OH⁻/Ce⁴⁺ = 4).

On détermine ensuite la composition chimique des espèces présentes sous forme colloïdale dans le sol aqueux qui est déterminée par analyse fluorescence X sur le résidu solide obtenu par ultracentrifugation (45 000 tours/mn., 1 heure) après séchage et calcination à 1 000°C durant 2 heures.

Le rapport molaire Fe/Ce, déterminé comparativement à des étalons de composition Fe/Ce définie, montre une valeur de l'ordre de 0,1.

Les exemples qui suivent illustrent l'obtention d'une dispersion colloïdale mixte par sursaturation en ions OH⁻ d'une solution mixte de nitrate cérique et de nitrate de zirconyle.

EXEMPLE 3 -

On additionne 55,85 g de nitrate de zirconyle ZrO(NO₃)₂, 2H₂O dans 1744 cm³ d'une solution de nitrate cérique contenant 1,2 moles/litre de cérium IV, 0,04 mole/litre de cérium III et ayant une acidité libre de 0,5 N.

Dans le mélange maintenu sous agitation, on ajoute à température ambiante 1256 cm³ d'une solution d'ammoniaque 6,19 N à raison de 100 cm³/heure puis 165 cm³ d'une solution d'ammoniaque 2,48 N au même débit.

On obtient une dispersion colloïdale aqueuse présentant une concentration en CeO₂ de l'ordre de 113,7 g/l et un pH d'environ 1,57.

L'examen d'une partie aliquote (250 cm$^3$) par diffusion quasi-élastique de la lumière permet de déterminer un diamètre hydrodynamique des colloïdes de l'ordre de 121 Å.

On poursuit l'addition de la solution d'ammoniaque 2,48 N par ajout de 40 cm$^3$.

La quantité de base ainsi additionnée dans le milieu réactionnel représente 80 % en moles de la quantité théorique nécessaire à la neutralisation complète du cérium et du zirconium présents dans le milieu réactionnel (OH$^-$/Zr$^{4+}$ = 4 et OH$^-$/Ce$^{4+}$ = 4).

On obtient une dispersion colloïdale aqueuse présentant une concentration en CeO$_2$ de l'ordre de 112 g/l et un pH de 2,58.

Le diamètre hydrodynamique des colloïdes mesuré par diffusion de la lumière est de 490 Å.

La composition chimique des espèces présentes sous forme colloïdale dans le sol aqueux est déterminée comme précédemment.

Le rapport molaire Zr/Ce déterminé est de l'ordre de 0,1.

EXEMPLE 4 -

On additionne 320,7 g de nitrate de zirconyle ZrO(NO$_3$)$_2$, 2H$_2$O dans 1000 cm$^3$ d'une solution de nitrate cérique contenant 1,2 moles/litre de cérium IV, 0,04 mole/litre de cérium III et ayant une acidité libre de 0,5 N : le rapport molaire Zr$^{4+}$/Ce$^{4+}$ est de 1.

Dans le mélange maintenu sous agitation, on ajoute à température ambiante, 650 cm$^3$ d'une solution d'ammoniaque 6,9 N à raison de 100 cm$^3$/heure puis 1016 cm$^3$ d'une solution d'ammoniaque 2,425 N au même débit.

La quantité de base ainsi ajoutée dans le milieu réactionnel représente 67 % en moles de la quantité théorique nécessaire à la neutralisation complète du cérium et du zirconium présents dans le milieu réactionnel (OH$^-$/Zr$^{4+}$ = 4 et OH$^-$/Ce$^{4+}$ = 4).

On obtient une dispersion colloïdale aqueuse présentant une concentration en CeO$_2$ de l'ordre de 77,4 g/l et un pH d'environ 2.

L'examen d'une partie aliquote (250 cm$^3$) par diffusion quasi-élastique de la lumière permet de déterminer un diamètre hydrodynamique des colloïdes de l'ordre de 350 Å.

Le rapport molaire Zr/Ce déterminé est de l'ordre de 0,65.

EXEMPLE 5 -

On additionne 139,6 g de nitrate de zirconyle ZrO(NO$_3$)$_2$ , 2H$_2$O dans 1744 cm$^3$ d'une solution de nitrate cérique contenant 1,2 moles/litre de cérium IV, 0,05 mole/litre de cérium III et ayant une acidité libre de 0,5 N : le rapport molaire Zr$^{4+}$/Ce$^{4+}$ est de 0,25.

Dans le mélange maintenu sous agitation, on ajoute à température ambiante, 1256 cm$^3$ d'une solution d'ammoniaque 6,19 N à raison de 100 cm$^3$/heure puis 696 cm$^3$ d'une solution d'ammoniaque 2,4 N au même débit.

La quantité de base ainsi ajoutée dans le milieu réactionnel représente 82 % de la quantité théorique nécessaire à la neutralisation complète du cérium et du zirconium présents dans le milieu réactionnel (OH/Zr$^{4+}$ = 4 et OH$^-$/Ce$^{4+}$ = 4).

On obtient une dispersion colloïdale aqueuse présentant une concentration en CeO$_2$ de l'ordre de 97 g/l et un pH d'environ 2,6.

Le dosage de la solution surnageante en cérium montre une très faible concentration en cérium total de l'ordre de 3,5 g/l ce qui permet de déterminer un pourcentage de cérium sous forme colloïdale dans la dispersion sursaturée voisin de 96 %.

La composition chimique des espèces présentes sous forme colloïdale dans le sol aqueux est déterminée comme précédemment.

Le rapport molaire Zr/Ce déterminé est de l'ordre de 0,13.

**Revendications**

1. Nouvelles dispersions colloïdales aqueuses d'un composé de cérium IV caractérisées en ce qu'elles contiennent une concentration en [OH$^-$] égale à la relation suivante :

$$[OH^-] = \frac{(n_1 \cdot r + n_2) \, [CeIV]_f \, [CeIV]_i}{n_1 \, ([CeIV]_i - [CeIV]_f)}$$

- [OH$^-$] représente la concentration en moles/litre de la solution basique
- [Ce IV]$_f$ représente la concentration en Ce IV en moles/litre de la dispersion colloïdale finale
- [Ce IV]$_i$ représente la concentration en Ce IV en moles/litre de la solution aqueuse du sel de cérium IV
- n1 représente le nombre de moles de Ce IV présentes dans la dispersion colloïdale finale
- n2 représente le nombre de moles OH$^-$ nécessaires pour neutraliser l'acidité apportée par la solution aqueuse du sel de cérium IV
- r représente le taux de sursaturation de la dispersion colloïdale et en ce que r varie entre 3 et 4, cette derniére valeur étant exclue, r étant calculé par la formule:

$$r = \frac{n_3 - n_2}{n_1}$$

dans laquelle, n$_2$ et n$_1$ ont les valeurs ci-dessus et n$_3$ représente le nombre total de moles OH$^-$ apportées par l'addition de la base.

2. Nouvelles dispersions colloïdales selon la revendication 1 caractérisées en ce que le taux de sursaturation r est compris entre 3,3 et 3,7, ces deux bornes étant exclues.

3. Nouvelles dispersions colloïdales selon la revendication 1 ou 2 caractérisées par le fait qu'elles présentent un taux de cérium sous forme colloïdale pouvant atteindre 100 %.

4. Nouvelles dispersions colloïdales selon l'une des revendications 1 ou 3 caractérisées par le fait qu'elles présentent une concentration en CeO$_2$ pouvant aller jusqu'à 30 % en poids.

5. Nouvelles dispersions colloïdales selon l'une des revendications 1 à 4 caractérisées par le fait qu'elles présentent une force ionique importante du fait qu'elles peuvent contenir de 0,3 à 8 moles/ litre du sel de la base.

6. Nouvelles dispersions colloïdales selon l'une des revendications 1 à 5 caractérisées par le fait que les colloïdes présentent une densité variant de 3,5 à 6,0.

7. Nouvelles dispersions colloïdales selon l'une des revendications 1 à 6 caractérisées par le fait que le diamètre hydrodynamique des colloïdes est compris entre 5 et 40 nm (50 et 400 Å).

8. Nouvelles dispersions colloïdales selon l'une des revendications 1 à 8 caractérisées par le fait qu'elles sont stables à température ambiante et lorsqu'elles sont soumises à une élévation de température n'excédant pas 100°C.

9. Procédé de préparation de dispersions colloïdales aqueuses sursaturées en ions OH$^-$ d'un composé de cérium IV selon l'une des revendications précédentes caractérisé par le fait qu'il consiste à faire réagir une solution aqueuse d'un sel de cérium IV contenant des ions nitrates avec une base de façon à obtenir une concentration en OH$^-$ égale à la relation suivante :

$$[OH^-] = \frac{(n_1 \cdot r + n_2) [Ce\ IV]_f [Ce\ IV]_i}{n_1 ([Ce\ IV]_i - [Ce\ IV]_f)} \qquad (III)$$

- [OH$^-$] représente la concentration en moles/litre de la dispersion basique
- [Ce IV]$_f$ représente la concentration en Ce IV en moles/litre de la dispersion colloïdale finale
- [Ce IV]$_i$ représente la concentration en Ce IV en moles/litre de la solution aqueuse du sel de cérium IV
- n1 représente le nombre de moles de Ce IV présentes dans la dispersion colloïdale finale
- n2 représente le nombre de moles OH$^-$ nécessaires pour neutraliser l'acidité apportée par la solution aqueuse du sel de cérium IV
- r représente le taux de sursaturation de la dispersion colloïdale et en ce que r varie entre 3 et 4 cette derniére valeur étant exclue et [Ce IV]$_f$ varie entre 0,1 mole/l et 2 moles/l et r est calculé par la formule :

$$r = \frac{n_3 - n_2}{n_1}$$

dans laquelle $n_1$ et $n_2$ ont les valeurs ci-dessus et $n_3$ représente le nombre total de moles OH$^-$ apportées par l'addition de la base.

10. Procédé selon la revendication 9 caractérisé par le fait que la solution de sel de cérium IV est une solution aqueuse de nitrate cérique ou une solution aqueuse de nitrate céri-ammoniacal.

11. Procédé selon l'une des revendications 9 et 10 caractérisé par le fait que la concentration en sel de cérium IV exprimée en cérium IV varie entre 0,1 et 3 moles/litre.

12. Procédé selon la revendication 11 caractérisé par le fait que la concentration en sel de cérium IV exprimée en cérium IV est comprise entre 0,1 et 1,5 moles/litre.

13. Procédé selon l'une des revendications 9 à 12 caractérisé par le fait que la base est une solution aqueuse d'ammoniaque, de soude ou de potasse ou de l'ammoniac gazeux.

14. Procédé selon la revendication 13 caractérisé par le fait que la normalité de la solution basique est comprise entre 5 à 11 N.

15. Procédé selon la revendication 13 caractérisé par le fait que la normalité de la solution basique est comprise entre 0,1 et 5 N.

16. Procédé selon l'une des revendications 9 à 15 caractérisé par le fait que le taux de sursaturation est supérieur ou égal à 3 et inférieur ou égal à 3,8.

17. Procédé selon la revendication 9 caractérisé par le fait que le pH final de la dispersion colloïdale du composé de cérium IV varie entre 0,3 et 3,0.

18. Procédé selon la revendication 9 caractérisé par le fait que la température de réaction entre la solution aqueuse du sel de cérium IV et la base se situe entre 0°C et 60°C.

19. Procédé selon la revendication 18 caractérisé par le fait que la température de réaction choisie est comprise entre 15°C et 25°C.

20. Procédé selon l'une des revendications 9 à 19 caractérisé par le fait que l'on mélange simultanément la solution aqueuse du sel de cérium IV et la solution basique ou que l'on additionne la base dans la solution de cérium IV et inversement.

21. Procédé selon la revendication 20 caractérisé par le fait que l'on ajoute une solution basique concentrée puis une solution basique diluée.

22. Dispersion colloïdale aqueuse mixte de cérium IV selon la revendication 1 caractérisée en ce qu'une partie du cérium IV est remplacée par un cation d'un métal M à caractère acide dont l'hydroxyde précipite à un pH inférieur à 4, et choisi dans le groupe 1b, 2b, 3b, 4b, 5b, 6b, 7b, le groupe 8 ou le groupe 3a et 4a.

23. Dispersions colloïdales aqueuses mixtes selon la revendication 22 caractérisées par le fait que le métal M est le fer, le zirconium.

24. Dispersions colloïdales aqueuses mixtes selon l'une des revendications 22 ou 23 caractérisées par le fait que le cation de métal M remplace de 0,1 à 50 % des moles de cérium IV.

25. Dispersions colloïdales aqueuses mixtes selon l'une des revendications 22 à 24 caractérisées par le fait que le diamètre hydrodynamique des colloides est compris entre 5 et 200 nm (50 et 2000 Å).

26. Procédé d'obtention de dispersions colloïdales aqueuses mixtes d'un composé de cérium IV et d'un cation $M^{n+}$ décrites dans l'une des revendications 22 à 25 caractérisé par le fait que l'on fait réagir une solution aqueuse d'un sel de cérium IV contenant des ions nitrates et d'un sel de métal M avec une base de façon à obtenir un taux de sursaturation supérieur à 3 et inférieur à 5,5.

27. Procédé selon la revendication 26 caractérisé par le fait que la quantité de base introduite représente de 60 à 95 % en moles de la quantité de base théorique nécessaire à la neutralisation complète du cérium IV et du cation $M^{n+}$ présents dans le milieu réactionnel.

28. Procédé selon la revendication 27 caractérisé par le fait que l'on introduit le sel de métal M sous forme solide dans la solution du sel de cérium IV avant l'addition de la base.

29. Procédé selon la revendication 27 caractérisé par le fait que l'on met le sel de métal M sous forme de solution aqueuse ayant une concentration variant entre 0,01 mole/litre jusqu'à sa solubilité maximale et que l'on mélange ladite solution avec la solution aqueuse du sel de cérium IV avant l'addition de la base.

**Claims**

1. New aqueous colloidal dispersions of a cerium IV compound, characterized in that they contain an [OH⁻] concentration equal to the following relation:

$$[OH^-] = \frac{(n_1.r + n_2)\ [CeIV]_f\ [CeIV]_i}{n_1\ ([CeIV]_i - [CeIV]_f)}$$

- [OH⁻] represents the concentration in moles/litre of the basic solution
- [Ce IV]$_f$ represents the Ce IV concentration in moles/litre of the final colloidal dispersion
- [Ce IV]$_i$ represents the Ce IV concentration in moles/litre of the aqueous solution of the cerium IV salt
- $n_1$ represents the number of moles of Ce IV present in the final colloidal dispersion
- $n_2$ represents the number of moles of OH⁻ necessary to neutralize the acidity introduced by the aqueous solution of the cerium IV salt
- r represents the degree of supersaturation of the colloidal dispersion, and in that r varies between 3 and 4, the latter value being excluded, r being calculated by the formula:

$$r = \frac{n_3 - n_2}{n_1}$$

in which, $n_2$ and $n_1$ have the values above and $n_3$ represents the total number of moles of $OH^-$ introduced by the addition of the base.

2. New colloidal dispersions according to claim 1, characterized in that the degree of supersaturation $r$ is between 3.3 and 3.7, these two limits being excluded.

3. New colloidal dispersions according to claim 1 or 2, characterized in that they have a content of cerium in colloidal form which may reach 100%.

4. New colloidal dispersions according to one of claims 1 or 3, characterized in that they have a $CeO_2$ concentration which may range up to 30% by weight.

5. New colloidal dispersions according to one of claims 1 to 4, characterized in that they have a high ionic strength due to the fact that they may contain from 0.3 to 8 mol/litre of the salt of the base.

6. New colloidal dispersions according to one of claims 1 to 5, characterized in that the colloids have a density which varies from 3.5 to 6.0.

7. New colloidal dispersions according to one of claims 1 to 6, characterized in that the hydrodynamic diameter of the colloids is between 5 and 40 nm (50 and 400 Å).

8. New colloidal dispersions according to one of claims 1 to 8, characterized in that they are stable at room temperature and when they are subjected to a temperature rise which does not exceed 100 °C.

9. Process for the preparation of aqueous colloidal dispersions of a cerium IV compound which are supersaturated with $OH^-$ ions according to one of the preceding claims, characterized in that it consists in reacting an aqueous solution of a cerium IV salt containing nitrate ions with a base in order to obtain an $OH^-$ concentration equal to the following relationship:

$$[OH^-] = \frac{(n_1 \cdot r + n_2) \, [Ce \; IV]_f \, [Ce \; IV]_i}{n_1 \, ([Ce \; IV]_i - [Ce \; IV]_f)} \qquad (III)$$

- $[OH^-]$ represents the concentration in moles/litre of the basic dispersion
- $[Ce \; IV]_f$ represents the Ce IV concentration in moles/litre of the final colloidal dispersion
- $[Ce \; IV]_i$ represents the Ce IV concentration in moles/litre of the aqueous solution of the cerium IV salt
- $n_1$ represents the number of moles of Ce IV present in the final colloidal dispersion
- $n_2$ represents the number of moles of $OH^-$ necessary to neutralize the acidity introduced by the aqueous solution of the cerium IV salt
- r represents the degree of supersaturation of the colloidal dispersion,
  and in that r varies between 3 and 4, the latter value being excluded, and $[Ce \; IV]_f$ varies between 0.1 mol/l and 2 mol/l and r is calculated by the formula:

$$r = \frac{n_3 - n_2}{n_1}$$

in which, $n_1$ and $n_2$ have the values above and $n_3$ represents the total number of moles of $OH^-$ introduced by the addition of the base.

10. Process according to claim 9, characterized in that the solution of cerium IV salt is an aqueous solution of ceric nitrate or an aqueous solution of ammonium cerium nitrate.

11. Process according to either of claims 9 and 10, characterized in that the concentration of cerium IV salt, expressed as cerium IV, varies between 0.1 and 3 mol/litre.

12. Process according to claim 11, characterized in that the concentration of cerium IV salt, expressed as cerium IV, is between 0.1 and 1.5 mol/litre.

13. Process according to one of claims 9 to 12, characterized in that the base is an aqueous solution of ammonia, sodium hydroxide or potassium hydroxide, or is gaseous ammonia.

14. Process according to claim 13, characterized in that the normality of the basic solution is between 5 and 11 N.

15. Process according to claim 13, characterized in that the normality of the basic solution is between 0.1 and 5 N.

16. Process according to one of claims 9 to 15, characterized in that the degree of supersaturation is greater than or equal to 3 and less than or equal to 3.8.

17. Process according to claim 9, characterized in that the final pH of the colloidal dispersion of the cerium IV compound varies between 0.3 and 3.0.

18. Process according to claim 9, characterized in that the temperature of the reaction between the aqueous solution of the cerium IV salt and the base is between 0°C and 60°C.

19. Process according to claim 18, characterized in that the reaction temperature chosen is between 15°C and 25°C.

20. Process according to one of claims 9 to 19, characterized in that the aqueous solution of the cerium IV salt and the basic solution are mixed simultaneously or in that the base is added to the cerium IV solution and vice versa.

21. Process according to claim 20, characterized in that a concentrated basic solution is added, followed by a dilute basic solution.

22. Mixed aqueous colloidal dispersion of cerium IV according to claim 1, characterized in that a part of the cerium IV is replaced by a cation of a metal M of acidic nature, the hydroxide of which precipitates at a pH lower than 4, and chosen from the group 1b, 2b, 3b, 4b, 5b, 6b, 7b, the group 8 or the group 3a and 4a.

23. Mixed aqueous colloidal dispersions according to claim 22, characterized in that the metal M is iron or zirconium.

24. Mixed aqueous colloidal dispersions according to either of claims 22 and 23, characterized in that the cation of metal M replaces from 0.1 to 50 mol% of cerium IV.

25. Mixed aqueous colloidal dispersions according to one of claims 22 to 24, characterized in that the hydrodynamic diameter of the colloids is between 5 and 200 nm (50 and 2000 Å).

26. Process for obtaining mixed aqueous colloidal dispersions of a cerium IV compound and a cation $M^{n+}$ described in one of claims 22 to 25, characterized in that an aqueous solution of a cerium IV salt containing nitrate ions and of a salt of metal M is reacted with a base in order to obtain a degree of supersaturation greater than 3 and less than 5.5.

**27.** Process according to claim 26, characterized in that the amount of base introduced represents from 60 to 95 mol% of the theoretical amount of base required to neutralize completely the cerium IV and the cation $M^{n+}$ present in the reaction medium.

**28.** Process according to claim 27, characterized in that the salt of metal M is introduced in solid form into the solution of the cerium IV salt before the addition of the base.

**29.** Process according to claim 27, characterized in that the salt of the metal M is put into the form of an aqueous solution having a concentration which varies between 0.01 mol/litre and its maximum solubility, and in that the said solution is mixed with the aqueous solution of the cerium IV salt before the addition of the base.

**Patentansprüche**

**1.** Neuartige kolloidale wäßrige Dispersionen einer Cer-IV-Verbindung, dadurch gekennzeichnet, daß sie eine $[OH^-]$-Konzentration gemäß der folgenden Gleichung enthalten:

$$[OH^-] = \frac{(n_1 \cdot r + n_2)\,[Ce\ IV]_f\,[Ce\ IV]_i}{n_1\,([Ce\ IV]_i - [Ce\ IV]_f)}$$

- $[OH^-]$ stellt die Konzentration der basischen Lösung in Mol/Liter dar
- $[Ce\ IV]_f$ stellt die Konzentration an Ce IV der resultierenden kolloidalen Dispersion in Mol/Liter dar
- $[Ce\ IV]_i$ stellt die Konzentration an Ce IV der wäßrigen Lösung des Cer-IV-Salzes in Mol/Liter dar
- n1 stellt die Molanzahl an Ce IV in der resultierenden kolloidalen Dispersion dar
- n2 stellt die Molanzahl an $OH^-$ dar, die notwendig ist, um die durch die wäßrige Lösung des Cer-IV-Salzes eingebrachte Säure zu neutralisieren
- r stellt den Übersättigungsgrad der kolloidalen Dispersion dar und r variiert zwischen 3 und 4, wobei der letzte Wert ausgeschlossen ist; r läßt sich berechnen gemäß der Formel:

$$r = \frac{n_3 - n_2}{n_1}$$

in der $n_2$ und $n_1$ die o.a. Werte haben und $n_3$ die Gesamtmolanzahl an $OH^-$ darstellt, eingebracht durch die Zugabe von Base.

**2.** Neuartige kolloidale Dispersionen nach Anspruch 1, dadurch gekennzeichnet, daß der Übersättigungsgrad r zwischen 3,3 und 3,7 liegt, wobei die beiden Grenzwerte ausgeschlossen sind.

**3.** Neuartige kolloidale Dispersionen nach Anspruch 1 oder 2, dadurch gekennzeichnet, daß sie einen Cer-Gehalt in kolloidaler Form haben, der 100 % erreichen kann.

**4.** Neuartige kolloidale Dispersionen nach einem der Ansprüche 1 oder 3, dadurch gekennzeichnet, daß sie eine Konzentration an $CeO_2$ haben, die bis zu 30 Gew.% betragen kann.

**5.** Neuartige kolloidale Dispersionen nach einem der Ansprüche 1 bis 4, dadurch gekennzeichnet, daß sie eine beträchtliche Ionenstärke besitzen aufgrund der Tatsache, daß die Dispersion ein Salz der Base von 0,3 bis 8 Mol/Liter enthalten kann.

**6.** Neuartige kolloidale Dispersionen nach einem der Ansprüche 1 bis 5, dadurch gekennzeichnet, daß die Kolloide eine Dichte zwischen 3,5 und 6,0 besitzen.

7. Neuartige kolloidale Dispersionen nach einem der Ansprüche 1 bis 6, dadurch gekennzeichnet, daß der hydrodynamische Durchmesser der Kolloide zwischen 5 und 50 nm (50 und 400 Å) liegt.

8. Neuartige kolloidale Dispersionen nach einem der Ansprüche 1 bis 8, dadurch gekennzeichnet, daß sie bei Umgebungstemperatur und einer Temperaturerhöhung, die 100 °C nicht übersteigt, stabil sind.

9. Herstellungsverfahren von wäßrigen kolloidalen Dispersionen einer Cer-IV-Verbindung, die mit $OH^-$-Ionen übersättigt ist nach einem der vorhergehenden Ansprüche, dadurch gekennzeichnet, daß es daraus besteht, eine wäßrige Lösung eines Cer-IV-Salzes, die Nitrationen enthält, mit einer Base derart reagieren zu lassen, daß man eine $OH^-$-Konzentration erhält, die der folgenden Gleichung entspricht:

$$[OH^-] = \frac{(n_1 \cdot r + n_2)\,[Ce\ IV]_f\,[Ce\ IV]_i}{n_1\,([Ce\ IV]_i - [Ce\ IV]_f)} \qquad (III)$$

- $[OH^-]$ stellt die Konzentration der basischen Lösung in Mol/Liter dar
- $[Ce\ IV]_f$ stellt die Konzentration an Ce IV der resultierenden kolloidalen Dispersion in Mol/Liter dar
- $[Ce\ IV]_i$ stellt die Konzentration an Ce IV der wäßrigen Lösung des Cer-IV-Salzes in Mol/Liter dar
- $n1$ stellt die Molanzahl an Ce IV in der resultierenden kolloidalen Dispersion dar
- $n2$ stellt die Molanzahl an $OH^-$ dar, die notwendig ist, um die durch die wäßrige Lösung des Cer-IV-Salzes mit eingebrachte Säure zu neutralisieren
- $r$ stellt den Übersättigungsgrad der kolloidalen Dispersion dar und $r$ variiert zwischen 3 und 4, der letzte Wert ist ausgeschlossen, $r$ läßt sich berechnen gemäß der Formel:

$$r = \frac{n_3 - n_2}{n_1}$$

in der $n_2$ und $n_1$ die o.a. Werte haben und $n_3$ die Gesamtmolanzahl an $OH^-$ darstellt, eingebracht durch die Zugabe von Base.

10. Verfahren nach Anspruch 9, dadurch gekennzeichnet, daß die Cer-IV-Salzlösung eine wäßrige Cer-Nitratlösung oder eine wäßrige ammoniakalische Cer-Nitratlösung ist.

11. Verfahren nach einem der Ansprüche 9 und 10, dadurch gekennzeichnet, daß die Konzentration des Cer-IV-Salzes, bezogen auf Cer-IV, zwischen 0,1 und 3 Mol/Liter liegt.

12. Verfahren nach Anspruch 11, dadurch gekennzeichnet, daß die Konzentration des Cer-IV-Salzes, bezogen auf Cer-IV, zwischen 0,1 und 1,5 Mol/Liter liegt.

13. Verfahren nach einem der Ansprüche 9 bis 12, dadurch gekennzeichnet, daß die Base gasförmiges Ammoniak oder eine wäßrige Lösung von Ammoniak, Natriumhydroxid oder Kaliumhydroxid ist.

14. Verfahren nach Anspruch 13, dadurch gekennzeichnet, daß die Normalität der basischen Lösung zwischen 5 und 11 N liegt.

15. Verfahren nach Anspruch 13, dadurch gekennzeichnet, daß die Normalität der basischen Lösung zwischen 0,1 und 5 N liegt.

16. Verfahren nach einem der Ansprüche 9 bis 15, dadurch gekennzeichnet, daß der Übersättigungsgrad größer oder gleich 3 und Kleiner oder gleich 3,8 ist.

**17.** Verfahren nach Anspruch 9, dadurch gekennzeichnet, daß der resultierende pH-Wert der kolloidalen Dispersion der Cer-IV-Verbindung zwischen 0,3 und 3,0 liegt.

**18.** Verfahren nach Anspruch 9, dadurch gekennzeichnet, daß die Reaktionstemperatur der wäßrigen Lösung des Cer-IV-Salzes mit der Base zwischen 0 und 60 °C liegt.

**19.** Verfahren nach Anspruch 18, dadurch gekennzeichnet, daß die Reaktionstemperatur zwischen 15 und 25 °C liegt.

**20.** Verfahren nach einem der Ansprüche 9 bis 19, dadurch gekennzeichnet, daß man gleichzeitig die wäßrige Lösung des Cer-IV-Salzes mit der basischen Lösung mischt oder daß man die Base zu der Cer-IV-Lösung hinzugibt oder umgekehrt.

**21.** Verfahren nach Anspruch 20, dadurch gekennzeichnet, daß man eine konzentrierte basische Lösung und danach eine verdünnte basische Lösung hinzugibt.

**22.** Gemischte wäßrige kolloidale Cer-IV-Dispersion nach Anspruch 1, dadurch gekennzeichnet, daß ein Teil des Cer-IV durch ein Kation des Metalls M mit Säureeigenschaften ersetzt ist, dessen Hydroxid bei einem pH-Wert unter 4 ausfällt und aus der Gruppe 1b, 2b, 3b, 4b, 5b, 6b, 7b, der Gruppe 8 oder der Gruppe 3a und 4a gewählt ist.

**23.** Gemischte wäßrige kolloidale Dispersionen nach Anspruch 22, dadurch gekennzeichnet, daß das Metall M Eisen oder Zirkonium ist.

**24.** Gemischte wäßrige kolloidale Lösungen nach einem der Ansprüche 22 oder 23, dadurch gekennzeichnet, daß das Kation des Metalls M 0,1 bis 50 Mol.% des Cer-IV ersetzt.

**25.** Gemischte wäßrige kolloidale Dispersionen nach einem der Ansprüche 22 bis 24, dadurch gekennzeichnet, daß der hydrodynamische Durchmesser der Kolloide zwischen 5 und 200 nm (50 und 2000 Å) liegt.

**26.** Herstellungsverfahren von gemischten wäßrigen kolloidalen Dispersionen einer Cer-IV-Verbindung und eines Kations $M^{n+}$ nach einem der Ansprüche 22 bis 25, dadurch gekennzeichnet, daß man eine wäßrige Lösung eines Cer-IV-Salzes, das Nitrationen enthält und eines Metallsalzes M mit einer Base derart reagieren läßt, daß man einen Übersättigungsgrad größer als 3 und Kleiner als 5,5 erhält.

**27.** Verfahren nach Anspruch 26, dadurch gekennzeichnet, daß die Menge der eingebrachten Base 60 bis 95 Mol.% der Menge an Base darstellt, die zur vollständigen Neutralisierung des Cer-IV und des Kation $M^{n+}$, die in dem Reaktionsgemisch vorliegen, theoretisch notwendig ist.

**28.** Verfahren nach Anspruch 27, dadurch gekennzeichnet, daß man das Metallsalz M in fester Form in die Lösung des Cer-IV-Salzes vor der Zugabe der Base einbringt.

**29.** Verfahren nach Anspruch 27, dadurch gekennzeichnet, daß man das Metallsalz M in Form einer wäßrigen Lösung hinzugibt, die eine Konzentration hat, die 0,01 Mol/Liter bis hin zur maximalen Löslichkeit betragen kann und daß man die genannte Lösung mit der wäßrigen Lösung des Cer-IV-Salzes vor der Zugabe der Base mischt.